# EUROPÄISCHE PATENTANMELDUNG

(11) **EP 3 012 592 A1**
(43) Veröffentlichungstag der Anmeldung: **27.04.2016**
(21) Anmeldenummer: 15199464.7
(22) Anmeldetag: 30.01.2014
(51) Int. Cl.: G01D 21/02, F24J 2/04, F24J 3/08

(54) **VERFAHREN UND VORRICHTUNG ZUM ERFASSEN UND ERMITTELN VON BETRIEBSPARAMETERN EINER ERDWÄRMESONDE**

(30) Priorität: 31.01.2013 DE 102013201609
(62) Teilanmeldung aus: 14701767.7
(71) Anmelder: EnBW Energie Baden-Württemberg AG, 76131 Karlsruhe (DE)
(72) Erfinder: KÖLBEL, Thomas, 76228 Karlsruhe (DE)
(74) Vertreter: DREISS Patentanwälte PartG mbB

(57) **Zusammenfassung**

Die vorliegende Erfindung betrifft ein Verfahren und Vorrichtungen zum Erfassen und Ermitteln einer Größe mindestens eines Betriebsparameters einer Erdwärmesonde. Die Erdwärmesonde ist in einem Bohrloch im Erdreich angeordnet, wobei die Erdwärmesonde mindestens ein Rohrbündel mit mehreren Rohren umfasst, über die Erdwärme aus tiefen Lagen des Erdreichs gewonnen wird. Über Signale mindestens eines Sensorelements wird eine Größe des mindestens einen Betriebsparameters für die Erdwärmesonde erfasst. Die Signale des mindestens einen Sensorelements werden anschließend mit Hilfe elektromagnetischer Wellen übertragen.

## Beschreibung

### Beschreibung

Die vorliegende Erfindung betrifft ein Verfahren nach dem Oberbegriff des Anspruchs 1. Außerdem ist Gegenstand der Erfindung ein Bohrwerkzeug nach dem Oberbegriff des Anspruchs 4.

Erdwärmesonden umfassen üblicherweise Rohrbündel, die in ein zuvor hergestelltes Bohrloch im Erdreich eingebracht werden. Mit der Erdwärmesonde wird Erdwärme aus tiefen Lagen des Erdreichs gewonnen, die zum Heizen, bspw. über eine Wärmepumpenheizung, verwendet wird. Alternativ kann die Erdwärmesonde auch zu Kühlzwecken eingesetzt werden.

Um eine gute Wärmeübertragung vom Erdreich zu der Erdwärmesonde zu realisieren, wird der nach dem Einführen der Erdwärmesonden verbleibende Hohlraum im Bohrloch mit einem ausreichend gut wärmeleitenden Material, bspw. einem Bentonit-Zement-Gemisch, gefüllt.

Üblicherweise ist die Erdwärmesonde aus Kunststoffrohren (z.B. Polyethylen, PE) hergestellt, wobei zum Betrieb der Erdwärmesonde die Rohre bspw. mit einem Gemisch aus Wasser und Frostschutzmittel (Wärmeträgerflüssigkeit) gefüllt sind.

Mit Hilfe einer Umwälzpumpe wird die in einem geschlossenen Kreislauf befindliche Wärmeträgerflüssigkeit durch die Erdwärmesonde gepumpt und dabei von dem umgebenden Erdreich über die Wandung der Rohre erwärmt.

Um insbesondere die zu erwartende thermische Leistung und Wirtschaftlichkeit der Erdwärmesonde beurteilen zu können, sind Bohrlochmesssonden bekannt, die kabelgebunden in das Bohrloch abgesenkt werden, um Betriebsparameter für die später in das Bohrloch eingeführt Erdwärmesonde zu ermitteln. Die Bohrlochmesssonden weisen dabei bevorzugt zumindest einen Druckaufnehmer und/oder einen Temperaturaufnehmer auf.

Die DE 10 2004 026 381 B3 zeigt ein Verfahren und eine Messvorrichtung zum Erfassen und Ermitteln eines Drucks und einer Temperatur in einer U-förmigen Erdwärmesonde durch eine kabellose Bohrloch-Messsonde. Dabei wird die Messsonde in die bereits im Bohrloch befindliche Erdwärmesonde abgelassen. Am Grund der Erdwärmesonde angekommen, erfasst die Messsonde in vorgegebenen Zeitabständen mit Hilfe von in der Messsonde angeordneten Sensorelementen eine Temperatur und einen Druck. Die erfassten Messwerte werden in einer Speichereinheit der Messsonde gespeichert. Nach Beendigung einer Messphase wird die Messsonde durch eine Ausspülvorrichtung mit einer Auffangvorrichtung an die Erdoberfläche befördert. Dort können die Speicherelemente ausgelesen werden.

Aus der US 2007/0168132 A1 ist ein Datenübertragungssystem bekannt, das in der Erdölförderung eingesetzt wird, um die bis zu mehreren Wochen dauernden Bohrungen in Echtzeit zu überwachen. Dieses System ist sehr aufwändig und daher nicht bei Bohrungen von Erdwärmesonden einsetzbar.

Aufgabe der Erfindung ist es, das Erfassen und Ermitteln von Betriebsparametern, die beim Niederbringen des Bohrlochs anfallen, zu vereinfachen.

Diese Aufgabe wird durch ein Verfahren nach Anspruch 1 und eine Vorrichtung nach Anspruch 4 gelöst. Signale mindestens eines Sensorelements werden mit Hilfe elektromagnetischer Wellen übertragen. Das bedeutet, dass im erfindungsgemäßen Verfahren die Signale des mindestens einen Sensorelements zu einer Ermittlung der Größe des Betriebsparameters und einer anschließenden Bewertung des Betriebsparameters drahtlos, mittels Funkwellen, übertragen werden. Dies könnte bspw. durch eine RFID-Anwendung (Radio-Frequency IDentification) oder einer Bluetooth-Anwendung realisiert werden. Dies führt in jedem Fall zu einer erheblichen Vereinfachung des Verfahrens.

Die Betriebsparameter werden insbesondere ausgewertet, um mögliche Unzulänglichkeiten des Bohrlochs vor dem Einbringen der Erdwärmesonde und nach dem Installieren der Erdwärmesonde - d. h. während des Betriebs - zu erkennen und beim späteren Betrieb der Erdwärmesonde optimale Ergebnisse zu erzielen. Dadurch kann sich die Amortisationszeit der Erdwärmesonde signifikant verkürzen. Auch kann die Zahl der Bohrlöcher optimiert werden, so dass einerseits nur so wenige Bohrlöcher wir nötig gebohrt werden müssen, andererseits aber die Erdwärmesonden später die geforderte thermische Leistung erbringen. Gleichzeitig soll mit dem Messsystem eine Einbaukontrolle (Messung von Druck und Temperatur des Verfüllmaterials während des Einbaus der Erdwärmesonde)vorgenommen werden.

In einer ersten Ausführungsform des Verfahrens ist vorgesehen, dass die Größe des mindestens einen Betriebsparameters während eines Bohrvorgangs in das Erdreich durch mindestens ein an einem Bohrwerkzeug angeordnetes Sensorelement erfasst wird. Das mindestens eine Sensorelement ist dabei bevorzugt in der Nähe eines Bohrmeißels am Bohrwerkzeug entgegen einer Bohrrichtung angeordnet. Damit können vorteilhafterweise Betriebsparameter kontinuierlich während der Bohrung erfasst und in unmittelbarer Nähe des Sensorelements gespeichert werden. Es ist nicht notwendig, die erfassten Messwerte in Echtzeit auszulesen, sondern es ist bei Bohrlöchern für Erdwärmesonden ausreichend, wenn nach erfolgter Bohrung der Bohrer aus dem Bohrloch gezogen und dann die gespeicherten Messwerte ausgelesen werden. Dadurch ist das erfindungsgemäße Verfahren sehr kostengünstig und zuverlässig.

Durch die mit Hilfe des erfindungsgemäßen Verfahrens ist es möglich, eventuelle Unzulänglichkeiten beim Bohren zu erkennen, um anschließend für einen späteren, optimalen Betrieb der Erdwärmesonde vorbeugende oder korrigierende Maßnahmen ergreifen zu können. So kann zum Beispiel beim Einbringen der Erdwärmesonde in das Bohrloch den Besonderheiten des Bohrlochs Rechnung getragen werden, indem das Bohrloch mit einem optimalen Material verfüllt und/oder besonders verdichtet wird.

Da das Bohrwerkzeug, insbesondere der Bohrmeißel, mechanisch stark beansprucht wird, muss das mindestens eine Sensorelement besonders gut gegen mechanische Zerstörung geschützt werden. Dazu kann z.B. das Bohrwerkzeug eine Aussparung am Umfang des Bohrwerkzeugs aufweisen, in die das mindestens eine Sensorelement eingelassen ist. Außerdem kann das Bohrwerkzeug samt des mindestens einen Sensorelements mit einem besonders widerstandsfähigen Kunststoffband als Schutzvorrichtung umwickelt sein. Vorteilhaft ist, wenn das Kunststoffband zusätzlich eine glatte Oberfläche aufweist. Es ist auch möglich, dass das Kunststoffband eine Perforation aufweist, damit Wasser und Erdreich beim Bohren mit dem mindestens einen Sensorelement in direkten Kontakt kommt, um bspw. ein möglichst genaues Erfassen einer Feuchtigkeit im Erdreich zu ermöglichen. Wenn die Schutzvorrichtung eine Dämpfung der erfassbaren Betriebsparameter verursacht, kann dieser Effekt durch entsprechende Kennlinien bei der Ermittlung der Größe der Betriebsparameter kompensiert werden.

Außerdem ist vorgesehen, dass mindestens ein Betriebsparameter in unterschiedlichen Tiefen im Erdreich erfasst und ermittelt wird. Dazu können an dem Bohrwerkzeug mehrere Sensorelemente angeordnet sein, wobei mindestens ein Sensorelement in einem vorgegebenen vertikalen Abstand zu einem anderen Sensorelement angeordnet ist. Das bedeutet, dass an dem Bohrwerkzeug, in Längserstreckung des Bohrwerkzeugs gesehen, mehrere Sensorelemente angeordnet sein können. Die Sensorelemente können dabei vom gleichen Typ sein, also zum Erfassen des gleichen Betriebsparameters vorgesehen sein. Die einzelnen Sensorelemente können aber auch unterschiedlichen Typs sein und damit unterschiedliche Betriebsparameter erfassen.

Natürlich können am Bohrwerkzeug auch unterschiedliche Sensorelemente in einer gleichen Höhe mit anderen Sensorelementen angeordnet sein, um auf einer gleichen Ebene im Erdreich mehrere Betriebsparameter zu erfassen.

Bevorzugte erfassbare Betriebsparameter im erfindungsgemäßen Verfahren sind Temperatur, Druck und/oder Feuchtigkeit, wobei die erfassten Betriebsparameter anschließend ausgewertet werden. Bedarfsweise können auch weitere, spezielle Sensorelemente angewandt werden, um z.B. unterschiedliche Untergrundformationen bzw. eine Untergrundbeschaffenheit, aber auch die Neigung des Bohrlochs zu analysieren.

Die Erfassung der Temperaturen im Bohrloch können beim Installieren von Erdwärmesonden wichtige Hinweise auf zutretende Wässer im Bohrloch, aber auch auf das Abbindeverhalten des Hinterfüllmaterials geben. An Hand von mehreren Temperaturermittlungen - bevorzugt in verschiedenen Tiefen - kann man auch unterschiedliche Untergrundformationen kartieren, was einen Hinweis auf die Effektivität beim Einsatz der Erdwärmesonde geben kann.

Durch die Ermittlung von Druckdifferenzen können Suspensionsverluste und Grundwasserzutritte während der Bohrung erkannt werden. Dies macht sich durch Ab- oder Zunahme des Drucks am Sensorelement und somit als Schwankung in den Druckverläufen bemerkbar. Größere Übertritte des Verfüllmaterials aus der Bohrung in das umgebende Gebirge führen zu einem langsameren bzw. zu gar keinem Anstieg des Suspensionsspiegels während der Hinterfüllung, was zu berücksichtigen ist und an einem langsameren Anstieg des Drucks in diesen Bereichen festgestellt werden kann. Auch kann eine Änderung einer Spülungssäule erkannt werden, da sich dies durch ein Absinken des Drucks am Bohrgestänge bemerkbar macht.

Ferner führt ein Verlust von Hinterfüllmaterial in Klüften zu einem plötzlichen Druckabfall, der erkannt werden kann. In all diesen Fällen kann das Personal vor Ort sofort mit geeigneten Maßnahmen reagieren.

Aus der Ermittlung der Feuchtigkeit ist eine Unterscheidung zwischen wasserleitenden und nicht-wasserleitenden Schichten ableitbar. Ein Anstieg der Feuchtigkeit z.B. kann auf einen Grundwassereinbruch hinweisen, der bei der Installation der Erdwärmesonde zu berücksichtigen ist.

In der ersten Ausführungsform des erfindungsgemäßen Verfahrens ist ferner vorgesehen, dass jedem Sensorelement ein semi-aktiver RFID-Transponder zugeordnet ist. Die RFID-Technik ist aus dem Stand der Technik hinreichend bekannt. Die nötigen RFID-Bauelemente sind sehr kostengünstig und kompakt aufgebaut und eignen sich dazu, Informationen zu speichern und diese anschließend drahtlos zu übertragen bzw. auszulesen.

Die gespeicherten Informationen sind im Wesentlichen durch die Sensorelemente erfasste Größen von Betriebsparametern. Die äußeren Abmessungen eines semi-aktiven Transponders mit einem Sensorelement sind etwa 2cm x 2cm x 2cm. In dem Speicherelement des semi-aktiven RFID-Elements können mehrere, zeitlich hintereinander erfasste Betriebsparameter gespeichert werden. Aktive RFID-Transponder sind natürlich auch anwendbar.

Man unterscheidet in der RFID-Technik passive, semi-aktive (oder semi-passive) und aktive Transponder.

Passive Transponder entnehmen ihre Betriebsspannung dem ausgesandten elektromagnetischen Feld einer RFID-Leseeinrichtung und speichern die Information für den Antwortvorgang in Kapazitäten im Chip. Die Leseeinrichtung bestrahlt den Transponder und dieser reflektiert einen Teil der Energie, wobei im zurückgesandten magnetischen Feld die entsprechende Information moduliert ist. Passive Transponder weisen in der Regel einen flüchtigen (volatilen) Speicher auf.

Semi-aktive Transponder besitzen eine (Stütz-)Batterie für einen im Transponder integrierten Speicher und zum Betrieb angeschlossener Sensorelemente. Die elektrische Leistung der Batterie erlaubt es, Informationen auch über eine längere Zeit speichern zu können. Die Datenübertragung erfolgt analog zu den passiven Transpondern.

Aktive Transponder nutzen Batterien für den Prozessor und auch für den Datentransfer, sind mit einem eigenen Sender ausgestattet und erreichen so eine höhere Übertragungs-Reichweite.

In der ersten Ausführungsform des erfindungsgemäßen Verfahrens ist außerdem vorgesehen, dass nach einem Herausziehen des Bohrwerkzeugs aus dem Bohrloch der mindestens eine Betriebsparameter vom Transponder auf eine Leseeinrichtung übertragen wird. Nach dem Herausziehen des Bohrwerkzeugs ist das mindestens eine Sensorelement mit dem zugeordneten semi-aktiven RFID-Transponder zugänglich, so dass der RFID-Transponder durch eine RFID-Leseeinrichtung drahtlos auslesbar ist. Die Informationen der verschiedenen RFID-Transponder können z.B. durch ein auf dem RFID-Transponder gespeichertes Identifikations-Tag (Kennzeichen) unterschieden werden, das mitübertragen wird. Die RFID-Leseeinrichtung ist mit eine Datenverarbeitungsanlage, z.B. einem PC oder Labtop, zur Auswertung der Informationen verbunden.

In einem zweiten Verfahren ist vorgesehen, dass die Größe des mindestens einen Betriebsparameters für die Erdwärmesonde über ein Messrohr, das parallel zu mindestens einem Rohr der Erdwärmesonde im Erdreich angeordnet ist, erfasst wird, wobei das Messrohr an einer Außenseite mindestens ein Sensorelement umfasst. Dabei wird das Messrohr bevorzugt in einem Rohrbündel der Erdwärmesonde, insbesondere eng anliegend an möglichst vielen Rohren, angeordnet.

Sind bspw. zwei U-Rohre zu einem Rohrbündel zusammengeführt, so können z.B. die vier Rohre des Rohrbündels in einer Draufsicht im Wesentlichen die Eckpunkte eines Quadrats bilden, wobei im Zentrum des so gebildeten Quadrats das Messrohr derart angeordnet ist, dass es alle vier Rohre berührt. Das Messrohr ist bevorzugt aus dem gleichen Material wie die Rohre der Erdwärmesonde, z.B. aus Polyethylen (PE) hergestellt.

Das zweite Verfahren ist bspw. dafür vorgesehen, die Qualität der Hinterfüllung z.B. im Zuge eines Thermal Response Tests zu überprüfen. Es besteht außerdem der Bedarf, den Hinterfüllungsvorgang kontinuierlich zu überwachen, um gegebenenfalls notwendige qualitätssichernde Maßnahmen möglichst früh anwenden zu können. Damit können zu einem Zeitpunkt, an dem einfache Verfahrenskorrekturen bereits den notwendigen Erfolg sicherstellen können, angewandt werden, was erhebliche wirtschaftliche Vorteile mit sich bringt. Dabei kann auch die Wärmeleitfähigkeit der Hinterfüllung beurteilt werden. Unzulänglichkeiten in diesem Bereich können nach der vollständigen Installation der Erdwärmesonde nur sehr schwer behoben werden.

Das Messrohr verbleibt vorzugsweise nach der Hinterfüllung im Bohrloch. Mit der zweiten Ausführungsform des Verfahrens kann der Betrieb der Erdwärmesonde nach der Installation in Bezug auf die Temperatur, den Druck und die Feuchtigkeit überwacht werden.

Insbesondere ist vorgesehen, dass am Messrohr mehrere Sensorelemente angeordnet sind, wobei mindestens ein Sensorelement in einem vorgegebenen vertikalen Abstand zu einem anderen Sensorelement angeordnet ist. Sinnvollerweise können die Sensorelemente außen am Messrohr dabei derart angeordnet sein, dass mehrere, unterschiedliche Sensorelemente jeweils auf einer gleichen Ebene angeordnet sind und dieser Satz von Sensorelementen in einem definierten vertikalen Abstand auf dem Messrohr wiederholt angeordnet ist. So könnten auf einer Ebene z.B. ein Temperatursensor, ein Drucksensor und ein Feuchtigkeitssensor angeordnet sein.

Das Bohrloch kann weit über 50 m tief sein, so dass die Sensorelemente oder der Satz von Sensorelementen bspw. in einem 10 Meter-Abstand am Messrohr angeordnet werden. Dadurch sind Betriebsparameter in einem vorgegebenen Abstand entlang der Erdwärmesonde überwachbar.

Ferner ist vorgesehen, dass jedem Sensorelement ein passiver RFID-Transponder zugeordnet ist. Dies ist eine sehr kostengünstige Lösung und ermöglicht die Anwendung der RFID-Technologie zum Erfassen der Betriebsparameter.

Ergänzend hierzu ist vorgesehen, dass an einer Position eines jeden außen am Messrohr angebrachten Sensorelements im Innern des Messrohrs die zugehörige RFID-Leseeinrichtung angeordnet ist. Bei der Anordnung von mehreren Sensorelementen auf unterschiedlicher Tiefe im Bohrloch können RFID-Leseeinrichtungen in einer Reihenschaltung hintereinander angeordnet werden. Dazu ist es allerdings nötig, dass die einzelnen RFID-Leseeinrichtungen mit unterschiedlichen Frequenzen betrieben werden, damit man die einzelnen erfassten Werte später aus dem Frequenzspektrum gezielt herausfiltern kann.

Natürlich können die RFID-Leseeinrichtungen auch mit einer eigenen Stromversorgung und einer eigenen Signalleitung betrieben werden. Um bei sehr tiefen Bohrlöchern eine ungewollte Dehnung der entsprechenden Kabel zu vermeiden, kann parallel zu den Kabeln ein nicht dehnbares Band oder Seil zusätzlich vorgesehen sein, wobei bspw. die einzelnen RFID-Leseeinrichtungen an dem Band oder Seil befestigt sind. Die erfassten Betriebsparameter können in der zweiten Ausführungsform unmittelbar übertragen und anschließend ausgewertet werden.

Im erfindungsgemäßen Verfahren ist ferner vorgesehen, dass der mindestens eine Betriebsparameter für die Erdwärmesonde in einem festgelegten Zeitintervall fortlaufend erfasst wird. In der ersten Ausführungsform soll der Bohrfortschritt überwacht werden, so dass hier das Zeitintervall relativ kurz, bspw. eine Erfassung pro Minute, gewählt werden sollte. In dem zweiten Verfahren soll im Wesentlichen der Betrieb der installierten Erdwärmesonde überwacht werden. Hier kann das Zeitintervall länger gewählt werden, z.B. eine Erfassung pro Stunde oder gar pro Monat.

Für die Erfindung wichtige Merkmale finden sich ferner in der nachfolgenden Beschreibung der Figuren, wobei die Merkmale sowohl in Alleinstellung als auch in unterschiedlichen Kombinationen für die Erfindung wichtig sein können, ohne dass hierauf jeweils explizit hingewiesen wird.

Nachfolgend werden anhand der Figuren Ausführungsbeispiele der Erfindung beispielhaft erläutert. Es zeigen:
- Figur 1: eine schematische Darstellung eines erfindungsgemäßen Bohrwerkzeugs zum Bohren eines Bohrlochs für eine Erdwärmesonde in einer Seitenansicht;
- Figur 2a: eine Anordnung von RFID-Leseeinrichtungen eines Messrohrs;
- Figur 2b: ein Rohr mit daran angeordneten Sensorelementen und RFID-Transpondern;
- Figur 2c: das Messrohr, erzeugt durch Kombinieren der Vorrichtungen aus den Figuren 2a und 2b in einer Seitenansicht; und
- Figur 3: eine Anordnung des Messrohrs aus Figur 2c in einem Bündel von Rohren einer Erdwärmesonde in einer Draufsicht.

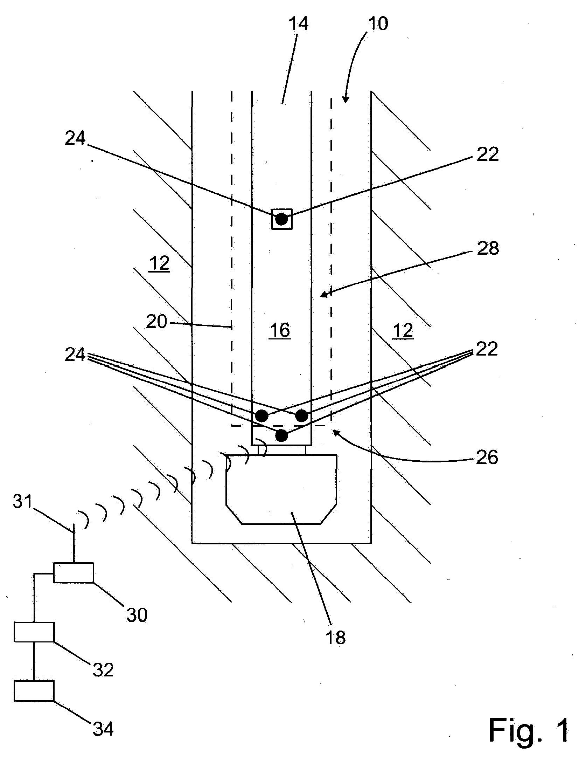

Figur 1 zeigt ein Bohrloch 10 im Erdreich 12 zum Zeitpunkt einer Erzeugung des Bohrlochs 10. Das Bohrloch 10 wird bspw. durch eine Imlochhammerbohrung erzeugt. Das Bohrloch dient dazu, eine aus dem Stand der Technik bekannte Erdwärmesonde (in Figur 1 nicht dargestellt) im Erdreich zu platzieren.

In dem Bohrloch 10 befindet sich ein Bohrwerkzeug 14 mit einem Bohrgestänge 16, wobei an dem unteren freien Ende des Bohrgestänges 16 ein Bohrmeißel 18 angeordnet ist. Die Imlochhammerbohrung ist meist eine sog. unverrohrte Bohrung und benötigt deswegen in der Regel eine Stützflüssigkeit (nicht dargestellt), die den anstehenden Erddruck zuverlässig aufnimmt und damit den Einsturz einer Wandung des Bohrlochs 10 verhindert. Verrohrungen sind jedoch auch möglich, was durch eine gestrichelte Linie mit dem Bezugszeichen 20 angedeutet ist.

Ein erstes erfindungsgemäßes Verfahren ist dazu vorgesehen, um während des Bohrvorgangs Betriebsparameter zum ordnungsgemäßen Durchführen des Bohrvorgangs überwachen zu können. Dazu sind außen an dem Bohrgestänge 16 mehrere Sensorelemente 22 angeordnet. Den Sensorelementen 22 sind jeweils semi-aktive RFID-Transponder 24 zugeordnet, so dass die Sensorelemente 22 mit den semi-aktiven RFID-Transpondern 24 jeweils eine Einheit bilden. Die auf dem RFID-Transponder 24 speicherbaren Informationen stellen im Wesentlichen durch die Sensorelemente 22 erfasste Größen von Betriebsparametern dar. Die gespeicherten Informationen auf dem semi-aktiven RFID-Transponder sind nicht flüchtig. Aktive RFID-Transponder können alternativ auch verwendet werden.

Ein RFID-Transponder ist Teil eines RFID-Systems. Ein Speicher des Transponders mit gespeicherten Informationen kann von einer RFID-Leseeinrichtung drahtlos ausgelesen werden. Zum Lesen der Information sendet die Leseeinrichtung über eine Antenne ein elektromagnetisches Hochfrequenzfeldfeld aus, das in seiner Ausbreitung den Transponder erreichen muss. Der Transponder umfasst einen elektronischen Schaltkreis zum Modulieren der auf dem Transponder gespeicherten Information in das elektromagnetische Hochfrequenzfeldfeld, das von der Leseeinrichtung interpretiert werden kann. Zum Lesen muss keine Sichtverbindung des Transponders zur Leseeinrichtung bestehen.

Bevorzugte Sensorelemente 22 zum Erfassen einer Größe eines Betriebsparameters sind Sensorelemente zum Erfassen einer Temperatur, eines Drucks und einer Feuchtigkeit. Eine bevorzugte Position zum Anordnen der Sensorelemente 22 mit den semi-aktiven RFID-Transpondern ist am Bohrgestänge 16 in einem Bereich in der Nähe des Bohrmeißels 18 (vgl. Bezugszeichen 26). So kann ein Bohrfortschritt optimal überwacht werden. In einer bevorzugten Ausführungsform sind alle drei Sensorelemente 22 in diesem Bereich angeordnet, um gleichzeitig drei Größen von Betriebsparametern zu erfassen, so wie es in Figur 1 durch die Darstellung von drei Sensorelementen 22 mit dem RFID-Transponder 24 angedeutet ist. Ein bevorzugtes Zeitintervall zum Erfassen von Größen der Betriebsparameter während des Bohrvorgangs ist bspw. eine Erfassung pro Minute, wobei jedes Erfassen separat in dem Speicher des semi-aktiven RFID-Transponders gespeichert wird.

Um die Überwachung des Bohrvorgangs zu verbessern, ist in einer bestimmten Entfernung zur erstgenannten Anordnung der Sensorelemente 22 mit den RFID-Transpondern 24 ein weiteres Sensorelement 22 mit RFID-Transponder 24 vorgesehen (vgl. Bezugszeichen 28). Das Sensorelement 22 kann zur Erfassung eines beliebigen Betriebsparameters vorgesehen sein; es können an der Position 28 natürlich bei Bedarf auch mehrere Sensorelemente 22 zur Erfassung mehrerer Betriebsparameter mit RFID-Transpondern 24 angeordnet werden.

Da der Bereich des Bohrgestänges, insbesondere des Bohrmeißels, mechanisch besonders stark beansprucht wird, müssen die Sensorelemente 22 mit den RFID-Transpondern 24 gegen mechanische Zerstörung geschützt werden. Dazu kann das Bohrwerkzeug 14 z.B. eine Aussparung am Umfang des Bohrwerkzeugs 14 aufweisen (nicht dargestellt), in die Sensorelemente 22 mit den RFID-Transpondern 24 eingelassen sind. Außerdem kann das Bohrwerkzeug 14 mitsamt den Sensorelementen 22 mit den RFID-Transpondern 24 mit einem besonders widerstandsfähigen Kunststoffband umwickelt sein. Dabei weist das Kunststoffband vorzugsweise eine glatte Oberfläche auf, die bei Bedarf auch perforiert oder wasserdurchlässig sein kann (nicht dargestellt). Auch kann das Sensorelement 22 mit den RFID-Transpondern 24 hinter einer perforierten Metallschelle gesichert werden.

Semi-aktive RFID-Transponder sind in der Lage, Informationen über einen längeren Zeitraum zu speichern. Deshalb ist es im erfindungsgemäßen Verfahren vorgesehen, dass der Bohrvorgang von Zeit zu Zeit unterbrochen wird und das Bohrwerkzeug 14 dabei aus dem Bohrloch 10 herausgezogen wird. Dadurch werden die RFID-Transponder 24, in denen die von den Sensorelementen 22 erfassten Informationen gespeichert sind, zugänglich. Die RFID-Transponder 24 werden dann über eine RFID-Leseeinrichtung 30 nach dem bekannten RFID-Verfahren drahtlos ausgelesen. Dazu weist die RFID-Leseeinrichtung 30 eine Antenne 31 auf, die üblicherweise in der RFID-Leseeinrichtung 30 integriert ist. Die ausgelesenen Informationen werden dann von der RFID-Leseeinrichtung 30 über eine Steuereinheit 32 einer Datenverarbeitungsanlage 34, z.B. einem PC oder einem Labtop, gesandt und dort ausgewertet, um Unzulänglichkeiten während des Bohrvorgangs zu erkennen. Dieser Vorgang muss für alle RFID-Transponder durchgeführt werden und ist in Figur 1 nur symbolisch für einen einzigen RFID-Transponder dargestellt.

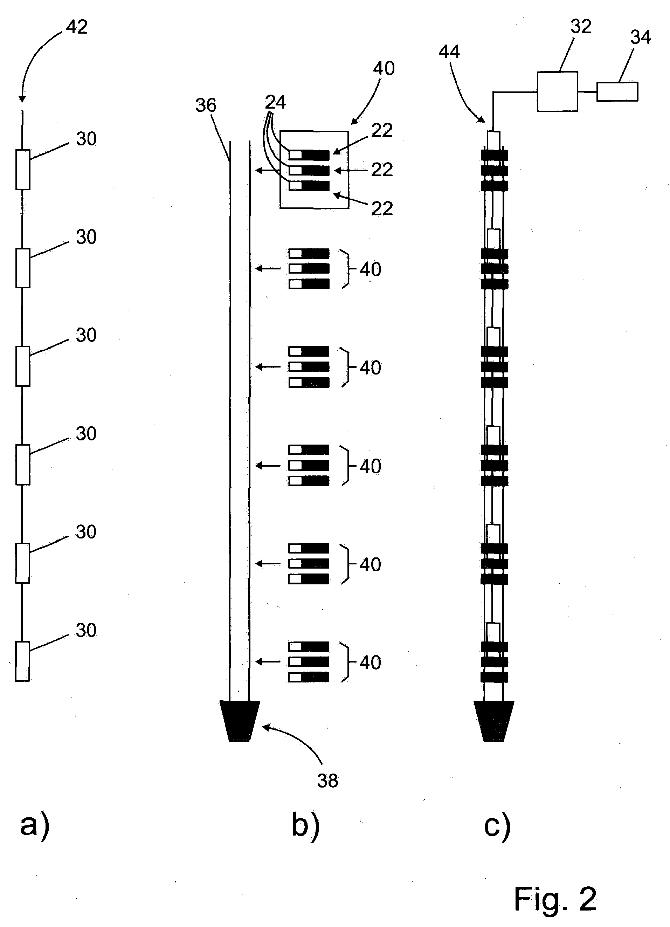

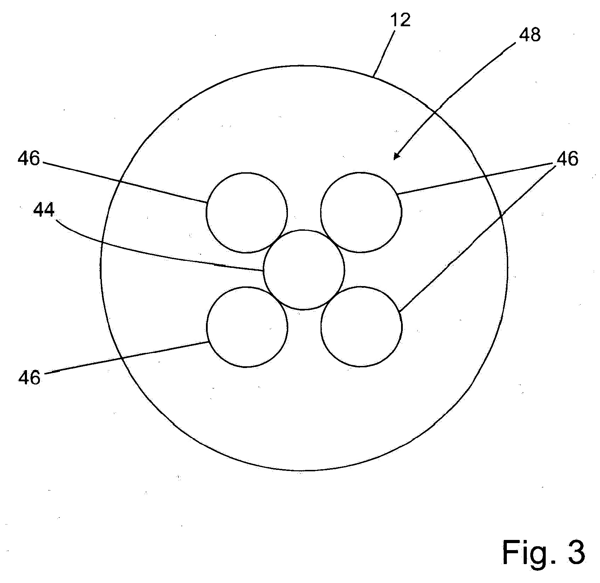

Ein zweites Verfahren ist dazu vorgesehen, um einerseits die Qualität der Hinterfüllung beim Auffüllen des Bohrlochs, z.B. im Zuge eines Thermal Response Tests, zu überprüfen und andererseits während einer Betriebsphase der Erdwärmesonde 48 (siehe Figur 3) Betriebsparameter zum ordnungsgemäßen Betrieb der Erdwärmesonde 48 zu ermitteln und auszuwerten. Dieses Verfahren wird im Folgenden an Hand der Figuren 2 und 3 beschrieben.

Figur 2b zeigt ein separates Rohr 36, das bevorzugt aus dem gleichen Material wie die Rohre der Erdwärmesonde, z.B. aus Polyethylen (PE), hergestellt ist. Das Rohr 36 weist im Wesentlichen die Länge des Bohrlochs 10 auf und ist in der Tiefe durch ein Verschlusselement 38 zumindest wasserdicht verschlossen.

An dem Rohr 36 sind außen vorzugsweise jeweils drei Sensorelemente 22 mit zugeordneten passiven RFID-Transpondern 24 angeordnet, so dass die Sensorelemente 22 mit den passiven RFID-Transpondern 24 eine Einheit bilden. Jeweils drei Sensorelemente 22 mit dem RFID-Transpondern 24 bilden einen Messsatz 40, wobei mehrere Messsätze 40 in einem bestimmten Abstand, z.B. in einem Abstand von 10 m, außen auf dem Rohr 36 angeordnet sind. Ein Messsatz 40 kann z.B. einen Temperatursensor, einen Drucksensor und einen Feuchtigkeitssensor umfassen; die Anzahl und der Typ der Sensoreinrichtungen 22 sind jedoch beliebig. Die auf den RFID-Transpondern 24 speicherbaren Informationen sind im Wesentlichen durch die Sensorelemente 22 erfasste Größen von Betriebsparametern.

Das Rohr 36 mit den darauf angeordneten Messsätzen 40 bildet einen Teil eines Messrohrs 44 zur Erfassung von Größen von Betriebsparametern in unterschiedlichen Tiefen beim Betreiben der Erdwärmesonde 48 im Erdreich 12.

Zum Lesen der Informationen von den passiven RFID-Transpondern 24 sind mehrere RFID-Leseeinrichtungen 30 nötig, die im inneren des Rohrs 36 im Wesentlichen an der Position angeordnet werden sollen, wo ein Messsatz 40 außen auf dem Rohr 36 angeordnet ist. Dazu sind mehrere RFID-Leseeinrichtungen 30 in der entsprechenden Position in Form einer Kette 42 aufgereiht. Eine solche Anordnung zeigt Figur 2a. An den RFID-Leseeinrichtungen 30 ist jeweils eine Stromversorgungsleitung und eine Signalleitung angeschlossen (nicht dargestellt). Die Kette 42 mit RFID-Leseinrichtungen 30 wird in das Rohr 36 eingeführt und bildet so mit dem Rohr 36 das komplette Messrohr 44. Das komplette Messrohr 44 ist in Figur 2c dargestellt.

Die RFID-Leseeinrichtungen 30 können auch in einer Reihenschaltung hintereinander angeordnet werden. Dazu ist es allerdings nötig, dass die RFID-Leseeinrichtungen 30 mit unterschiedlichen Frequenzen betrieben werden, damit man die einzelnen erfassten Werte später aus dem Frequenzspektrum gezielt herausfiltern kann.

Die von den RFID-Leseeinrichtungen 30 ausgelesenen Informationen werden anschließend über eine Steuereinheit 32 an eine Datenverarbeitungsanlage 34, z.B. einem PC oder einem Labtop, gesandt und dort ausgewertet, um z.B. den Betrieb der Erdwärmesonde 48 (siehe Figur 3) überwachen zu können. Die Größen der Betriebsparameter für die Erdwärmesonde 48 werden in einem in der Datenverarbeitungsanlage 34 vorgegebenen Zeitintervall, z.B. eine Erfassung pro Stunde, fortlaufend erfasst und anschließend in der Datenverarbeitungsanlage 34 ausgewertet.

Figur 3 zeigt eine mögliche Anordnung des Messrohrs 44 in einem Bündel von Rohren 46 einer Erdwärmesonde 48 in einer Draufsicht. Zwei Rohre 46 können dabei ein U-Rohr der in das Erdreich 12 eingelassenen und hinterfüllten Erdwärmesonde 48 darstellen. Das Messrohr 44 wird bevorzugt an mehreren Rohren 46 der Erdwärmesonde 48, insbesondere eng anliegend, angeordnet. Auf die Darstellung der Sensorelemente 22 mit den RFID-Transpondern 24 und der Kette 42 mit den RFID-Leseeinrichtungen 30 wurde in Figur 3 verzichtet. In Figur 3 sind z.B. zwei U-Rohre dargestellt, die zu einem Rohrbündel der Erdwärmesonde 48 zusammengeführt sind, so dass die vier Rohre 46 des Rohrbündels in einer Draufsicht im Wesentlichen die Eckpunkte eines Quadrats bilden. Im Zentrum des so gebildeten Quadrats ist das Messrohr 44 derart angeordnet, dass es idealerweise alle vier Rohre 46 berührt.

So können die Größen der Betriebsparameter beim Betreiben der Erdwärmesonde 48 laufend überwacht werden.

## Patentansprüche

1. Verfahren zum Erzeugen eines Bohrlochs für eine Erdwärmesonde (48), wobei durch Auswertung von Signalen mindestens eines an einem Bohrwerkzeug (14) angeordneten Sensorelements (22) eine Größe mindestens eines Betriebsparameters für die Erdwärmesonde (48) erfasst wird, **dadurch gekennzeichnet, dass** die Signale des mindestens einen Sensorelements (22), während eine Bohrung in das Erdreich (12) durchgeführt wird, in unmittelbarer Nähe des Sensorelements (22) abgespeichert und zu einem späteren Zeitpunkt, nach einem Herausziehen des Bohrwerkzeugs (14) aus dem Bohrloch (10), mit Hilfe elektromagnetischer Wellen an ein Lesegerät (34) übertragen werden.

2. Verfahren nach Anspruch 1, **dadurch gekennzeichnet, dass** mindestens ein Betriebsparameter in unterschiedlichen Tiefen im Erdreich (12) erfasst und abgespeichert wird.

3. Verfahren nach einem der vorhergehenden Ansprüche, **dadurch gekennzeichnet, dass** durch das Verfahren eine Temperatur, ein Druck und/oder eine Feuchtigkeit erfasst und ausgewertet werden.

4. Bohrwerkzeug (14) zum Erzeugen eines Bohrlochs (10) für eine Erdwärmesonde (48), **dadurch gekennzeichnet, dass** mindestens ein Sensorelement (22) mindestens in der Nähe eines Bohrmeißels (18) derart am Bohrwerkzeug (14) entgegen einer Bohrrichtung angeordnet ist, dass durch Auswertung von Signalen des mindestens einen Sensorelements (22) eine Größe mindestens eines Betriebsparameters für die Erdwärmesonde (48) erfassbar ist, dass die Signale des mindestens einen Sensorelements (22) während die Bohrung in das Erdreich (12) durchgeführt wird in unmittelbarer Nähe des Sensorelements (22) abspeicherbar sind und dass die Signale nur zu einem späteren Zeitpunkt, nach einem Herausziehen des Bohrwerkzeugs (14) aus dem Bohrloch (10), mit Hilfe elektromagnetischer Wellen an ein Lesegerät (34) übertragbar sind.

5. Bohrwerkzeug (14) nach Anspruch 4, **dadurch gekennzeichnet, dass** am Bohrwerkzeug (14) mehrere Sensorelemente (22) angeordnet sind, wobei mindestens ein Sensorelement (22) in einem vorgegebenen vertikalen Abstand zu einem anderen Sensorelement (22) angeordnet ist.

6. Bohrwerkzeug (14) nach Anspruch 4 oder 5, **dadurch gekennzeichnet, dass** jedem Sensorelement (22) ein semi-aktiver RFID-Transponder (24) zugeordnet ist.

7. Bohrwerkzeug (14) nach Anspruch 6, **dadurch gekennzeichnet, dass** der semi-aktive RFID-Transponder (24) durch eine RFID-Leseeinrichtung (30) auslesbar ist.
